# EUROPEAN PATENT APPLICATION

(11) **EP 3 629 611 A1**
(43) Date of publication of application: **01.04.2020**
(21) Application number: 18306268.6
(22) Date of filing: 27.09.2018
(51) Int. Cl.: H04W 8/20

(54) **A METHOD FOR DOWNLOADING SUBSCRIPTIONS OF A MOBILE RADIOTELEPHONE OPERATOR IN SECURITY ELEMENTS AND CORRESPONDING SUBSCRIPTION DOWNLOAD SERVER**

(71) Applicant: Thales Dis France SA, 92190 Meudon (FR)
(72) Inventor: AMBROSINO, Magali, 13881 GEMENOS cedex (FR); PICO, Richard, 13881 GEMENOS cedex (FR); GARCIN, Florent, 13881 GEMENOS cedex (FR); PERTICARA, François, 13881 GEMENOS cedex (FR); ALLEMAND, Jerome, 13881 GEMENOS cedex (FR)
(74) Representative: Scheer, Luc

(57) **Abstract**

The present invention concerns a method for downloading subscriptions of a mobile radiotelephone operator in security elements, each integrated in a telecommunication terminal, the subscriptions each comprising:
- an electrical profile of the operator
- personalization data specific to each security element
characterized in that the method comprises:
- on the one hand, a successive generation over time of different versions of electrical profiles of the operator, the different versions of the electrical profiles comprising no personalization data;
- on the other hand, a generation of personalization data specific to each security element the method consisting in associating, at a subscription download server (50), and for each download of a subscription in one of the security elements, the latest version of the available electrical profile and one of the customization data, and to download the corresponding subscription in the security element.

## Description

The present invention concerns telecommunications and more particularly a way to provision profile or subscription in a solution (On Demand Connectivity) which implement the GSMA SGP.22 specification.

This specification provides a technical description of the GSMA's 'Remote SIM Provisioning (RSP) Architecture for consu-mer Devices'.

The invention especially applies to the provisioning of secure elements like eUICCs (embedded UICCs) or iUICCs (integrated UICCs).

In the state of the art, as defined in the SGP.22 specification, a subscription comprises:
- an electrical profile of an operator;
- personalization data specific to each security element.

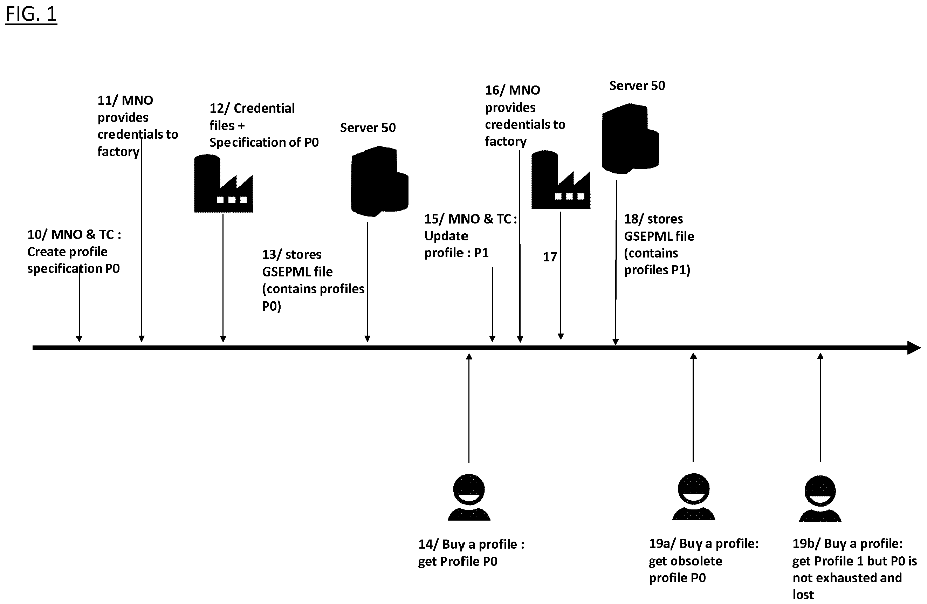

Figure 1 shows how the download of a subscription occurs in a secure element.

At step 10, a MNO (Mobile Network Operator) and a TC (Technical Consultant) create an electric profile specification P0. This electric profile comprises, like defined by the GSMA, a combination of a file structure, data and applications to be provisioned onto, or present on, a secure element like a eUICC.

At step 11, the MNO provides credentials (personalization data) to a factory. Each of these credentials comprise namely an IMSI and a key Ki. The credential files are protected by a transport key.

At step 12, the factory creates a plurality of subscriptions comprising the electric profile P0 associated with a plurality of IMSI/Ki.

At step 13, these subscriptions are sent to a subscription download server 50 through a provisioning file (called GSEPML).

At step 14, a user of a telecommunication terminal (for example a mobile terminal like a smartphone) comprising a secure element asks for the download of a profile. He gets the profile P0 comprising personalization data. This profile is downloaded over the air in the secure element and the user then owns a subscription allowing him to communicate with the MNO core network.

At step 15, the MNO and the TC decide to update the profile P0 (change it entirely of patch it for example). A profile P1 replaces then the profile P0. This profile P1 is associated (step 17) with new credentials furnished by the MNO (step 16).

At step 18, the server 50 gets a GSEPML file containing a plurality of subscriptions with the profile P1.

Then, two solutions are offered to the owner of the server 50 (typically owned by the MNO): Either, when a user (step 19a) asks for a profile, the server 50 can download a subscription containing the obsolete profile P0. This permits to not waste the credentials associated to the profile P0: The profile P0 has been associated with credentials that were not bought when P0 has been replaced by P1 and, if P1 is downloaded to the secure element of the user at step 19a, these credentials are lost and in particular the IMSI/Ki associated with P0. This represents a cost for the MNO who is attempted to download an obsolete profile. The MNO can later on modify over the air (with an OTA platform) the profile P0 in order to replace it by the profile P1 but this represents a cost. This solution is also not very convenient since the terminal containing the secure element containing P0 can be out of coverage.

The second solution, more convenient, is to download (step 19b) the profile P1 in the secure element with new credentials but, as already said, the credentials used for creating subscriptions with the profile P0 are lost.

In summary, the solution to update obsolete profiles of secure elements on the field by OTA campaigns can't cover all use cases, especially evolution of the SIM Alliance profile template, and has a cost for MNO (huge number of SMS or huge data), and many retries because not 100% of profiles are reachable at the first time (mobile terminal out of coverage).

The second solution consisting in deleting all profiles already provisioned in the server 50 when a new profile is created and new provisioning the server 50 with the new profiles has also a cost because the MNO lost lot of credential (IMSI / KI).

The present invention proposes a solution to these problems.

More precisely, the invention proposes a method for downloading subscriptions of a mobile radiotelephone operator in security elements, each integrated in a telecommunication terminal, the subscriptions each comprising:
- an electrical profile of the operator
- personalization data specific to each security element
this method comprising:
- on the one hand, a successive generation over time of different versions of electrical profiles of the operator, the different versions of the electrical profiles comprising no personalization data;
- on the other hand, a generation of personalization data specific to each security element the method consisting in associating, at a subscription download server, and for each download of a subscription in one of the security elements, the latest version of the available electrical

profile and one of the customization data, and the download of the corresponding subscription in the security element.

Preferably, the security elements are eUICCs or iUICCs.

The invention also concerns a subscription download server of subscriptions in security elements, each security element cooperating with a telecommunication terminal, each of the subscriptions comprising:
- an electrical profile of the operator
- personalization data specific to each security element
the subscription download server comprising means for associating, for each download of a subscription in one of the security elements, the latest version of an available electrical profile comprising no personalization data and one of the personalization data, and for downloading the corresponding subscription in the security element.

The invention will be better understood in regard of the following description of the figures that represent:
- Figure 1 the download of subscriptions according to the state of the art;
- Figure 2 the generation and download of subscriptions according to the present invention.

Figure 1 has been described above in regard of the state of the art.

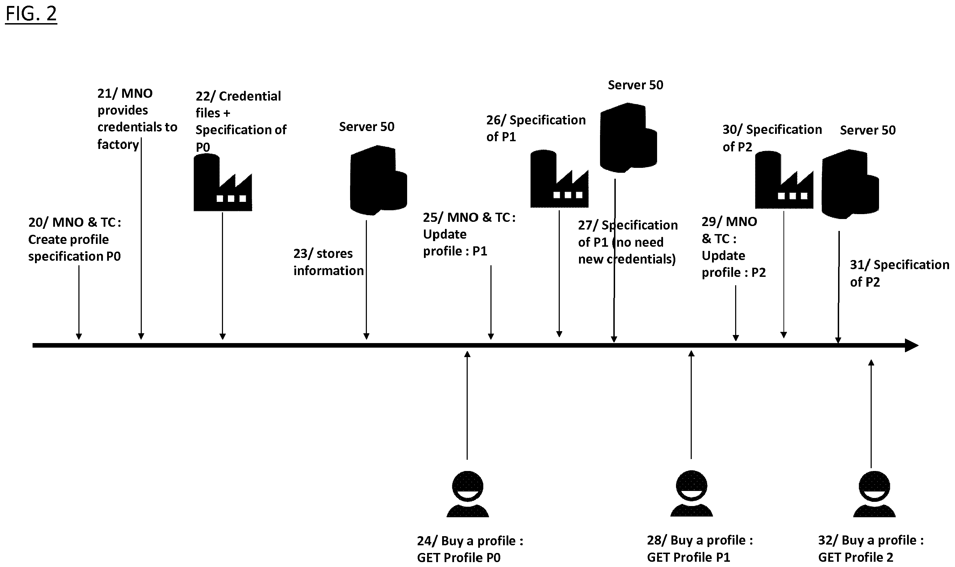

Figure 2 represents the generation and download of subscriptions according to the present invention.

In this figure, steps 20 to 22 are identical to steps 10 to 12 of the state of the art (a profile P0 is created and a MNO provides credentials. The profile P0 and the credentials are transmitted to a factory).

At step 23, the profile P0 and the credentials (batches of IMSI/Ki) are transmitted and stored in the server 50. The difference here, according to the invention, is that no complete subscriptions are stored at the level of the server 50. The server stores separately on one hand the profile P0 and on the other hand the plurality of credentials.

At step 24, a user buys a profile. The server 50 then generates on the fly an entire subscription associating a couple of IMSI/Ki with profile P0 and downloads this subscription in the secure element of the terminal of the user.

At step 25 (like previously at step 15), the MNO and the TC decide to update the profile P0 (change it entirely of patch it for example). A profile P1 is then generated. This profile is the latest version of the available electrical profiles.

At step 26, the specification of P1 is sent to the server 50 and stored therein in place of specification P0 that can be deleted (step 27). If there are still existing credentials (this is commonly the case), no new credentials have to be generated.

At step 28, a user wants to download a subscription. Here, as at step 24, the server 50 generates on the fly an entire subscription associating a couple of IMSI/Ki with profile P1 and downloads this subscription in the secure element of the terminal of the user.

Steps 29 to 32 are almost identical to steps 25 to 28, with the difference that here a new profile P2 is considered.

So, according to the invention, when a user wants to download a profile, the server will take the last version of the specification file and insert credential information inside and then send a digital profile (a subscription) to the end user.

Generally speaking, the method according to the invention comprises:
- on the one hand, a successive generation over time of different versions of electrical profiles of the operator, the different versions of the electrical profiles comprising no personalization data;
- on the other hand, a generation of personalization data specific to each security element the method consisting in associating, at the subscription download server, and for each download of a subscription in one of the security elements, the latest version of the available electrical profile and one of the customization data, and to download the corresponding subscription in the security element.

The proposed solution guaranties to download an up to date profile to the end user. The MNO has a simple solution to manage easily the update and modification of the profile without waste of IMSI/KI (already provisioned in the MNO Network). The invention also permits to decrease the number of update campaigns using OTA and the provisioning is faster because the complete profile is generated at the download (On demand Generation).

The subscription download server 50 of the present invention comprises means for associating, for each download of a subscription in one of the security elements, the latest version of an available electrical profile comprising no personalization data and one of the personalization data, and for downloading the corresponding subscription in the security element.

## Claims

1. A method for downloading subscriptions of a mobile radiotelephone operator in security elements, each integrated in a telecommunication terminal, said subscriptions each comprising:
- an electrical profile of said operator
- personalization data specific to each security element
**characterized in that** said method comprises:
- on the one hand, a successive generation over time of different versions of electrical profiles of said operator, said different versions of said electrical profiles comprising no personalization data;
- on the other hand, a generation of personalization data specific to each security element said method consisting in associating, at a subscription download server (50), and for each download of a subscription in one of said security elements, the latest version of the available electrical profile and one of said customization data, and to download the corresponding subscription in said security element.

2. Method according to claim 1, **characterized in that** said security elements are eUICCs or iUICCs.

3. Subscription download server (50) of subscriptions in security elements, each security element cooperating with a telecommunication terminal, each of said subscriptions comprising:
- an electrical profile of said operator
- personalization data specific to each security element
said subscription download server (50) comprising means for associating, for each download of a subscription in one of said security elements, the latest version of an available electrical profile comprising no personalization data and one of said personalization data, and for downloading the corresponding subscription in said security element.
